(19) Europäisches Patentamt
European Patent Office
Office européen des brevets

(11) Veröffentlichungsnummer: **0 175 287**
**B1**

(12) # EUROPÄISCHE PATENTSCHRIFT

(45) Veröffentlichungstag der Patentschrift: **08.11.89**

(51) Int. Cl.⁴: **B 01 J 20/10, C 11 D 1/645**

(21) Anmeldenummer: **85111554.3**

(22) Anmeldetag: **12.09.85**

(54) **Verwendung von Organophil modifizierten Schichtkieselsäuren als waschverstärkende Additive in Waschmitteln.**

(30) Priorität: **21.09.84 DE 3434709**

(43) Veröffentlichungstag der Anmeldung: **26.03.86 Patentblatt 86/13**

(45) Bekanntmachung des Hinweises auf die Patenterteilung: **08.11.89 Patentblatt 89/45**

(84) Benannte Vertragsstaaten: **AT BE CH DE FR GB IT LI NL SE**

(56) Entgegenhaltungen:
**EP-A- 0 111 074**
**EP-A- 0 151 936**
**EP-A- 0 163 910**
**DE-B- 2 742 912**
**DE-B- 2 742 912**

**AMERICAN MINERALOGIST, Band 60, 1975, Seiten 642-649; G. LAGALY et al.: "Magadiite and H-magadiite: I. Sodium magadiite and some of its derivatives"**

(73) Patentinhaber: **HOECHST AKTIENGESELLSCHAFT, Postfach 80 03 20, D-6230 Frankfurt am Main 80 (DE)**

(72) Erfinder: **Hanauer, Johann Franz, Dr., Kreuzheck 4, D-6239 Eppstein/Taunus (DE)**
Erfinder: **Rieck, Hans-Peter, Dr., Staufenstrasse 13a, D-6238 Hofheim am Taunus (DE)**
Erfinder: **Kalz, Hans-Jürgen, Dr., Am Wehr 5, D-6237 Liederbach (DE)**
Erfinder: **Quack, Jochen Meinhard, Dr., Wilhelm-Reuter-Strasse 16, D-6239 Eppstein/Taunus (DE)**

**EP 0 175 287 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Organophile Schichtsilikate können durch Umsetzung von natürlich vorkommenden Schichtsilikaten, wie z. B. Montmorillonit, mit quartären Ammoniumverbindungen hergestellt werden. Produkte auf Basis von längerkettingen quartären Ammoniumverbindungen und Bentonit finden eine breite Anwendung als rheologiebeeinflussende Additive für Lacksysteme. Hierbei ist die Quellfähigkeit des Organoschichtsilikats in organischen Lösungsmitteln von Bedeutung.

Weiterhin werden in der Patentanmeldung EP-A-0 076 572 Schichtsilikate in Kombination mit quartären Ammoniumverbindungen und tertiären Aminen für den Einsatz in Waschmittelformulierungen beschrieben. Diese Additive sollen nach dem Waschvorgang die unerwünschte Griffverhärtung der Wäsche reduzieren.

Ebenfalls in der Literatur beschrieben sind Schichtsilikatkomplexe von Glyceriden, Lecithinen und Phytolderivaten, wobei natürlich vorkommende glimmerartige Schichtsilikate mittlerer und niedriger Schichtladung vewendet werden (G. Dischinger, München 1983, Dissertation).

Die Verwendung von mit quartären Ammoniumverbindungen modifizierten Schichtsilikaten als Weichmachersysteme wird in der Patentanmeldung EP-A-0 163 910 beschrieben.

Nach American Mineralogist, Bd. 60, 1975, S 642–649 können organische Derivate von Magadiit ($Na_2Si_{14}O_{29} \cdot 11\ H_2O$) durch Kationenaustausch unter Verwendung quaternärer Ammoniumverbindungen hergestellt werden.

Es wurde nun gefunden, daß bestimmte kristalline Alkalischichtsilikate, welche durch organische quartäre Ammoniumverbindungen modifiziert werden, hervorragende Adsorbentien für organische Verbindungen darstellen.

Gegenstand der Erfindung ist die Verwendung von organophil modifizierten Schichtkieselsäuren als waschverstärkende Additive in Waschmitteln, gegebenenfalls in Gegenwart von weichmachenden Substanzen. Diese Adsorbentien werden im folgenden Text mit Organo-SKS bezeichnet und werden hergestellt aus

a) 5–80%, vorzugsweise 10–50% einer quartären Ammoniumverbindung der Formeln I–IV.

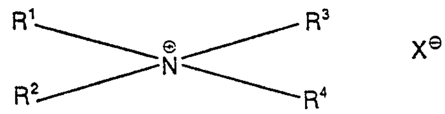
(I)

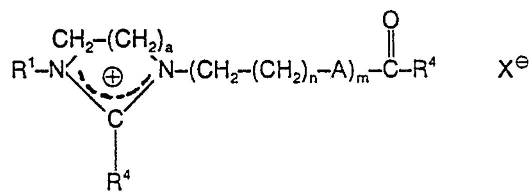
(II)

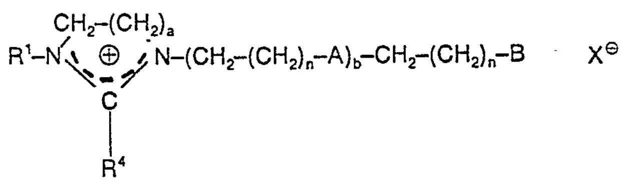
(III)

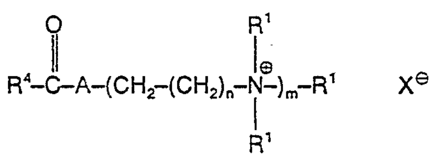
(IV)

wobei $R^1$ und $R^2$ gleich oder verschieden sein können und Wasserstoff, $C_1$–$C_4$-Alkyl, $C_2$–$C_4$-Hydroxyalkyl oder Benzyl, $R^3$ Wasserstoff, $C_1$–$C_{22}$-, vorzugsweise $C_6$–$C_{22}$-Alkyl bzw. -Alkenyl, $C_2$–$C_4$-Hydroxyalkyl oder Benzyl, $R^4$ $C_1$–$C_{22}$-, vorzugsweise $C_6$–$C_{22}$-Alkyl, $C_6$–$C_{22}$-Alkenyl, $C_4$–$C_{22}$-Alkoxyalkyl, $C_4$–$C_{22}$-Alkylphenoxyethyl, a 1 oder 2, b eine Zahl von 0 bis 3, n bzw. m eine Zahl von 1–4, A NH oder O, B $NH_2$, $N(R^1)_2$, $\overset{\oplus}{N}(R^1)_3X^{\ominus}$ oder OH und $X^{\ominus}$ ein Anion bedeuten, sowie

b) 20–95%, vorzugsweise 50–90% eines kristallinen Schichtsilikats aus der Gruppe der Phyllosilikate der Formel

$$Me_2Si_xO_{2x+1} \cdot yH_2O$$

wobei Me ein Alkalimetallion oder ein Proton, x eine Zahl größer 7, insbesondere von 7,5 bis 23 und y eine Zahl kleiner 7 x bedeutet.

Die oben erwähnten kristallinen Alkalisilikate (Schichtsilikate) weisen gegenüber den in vielen Patentschriften erwähnten Smectiten, wozu auch Montmorillonite und Hectorite gehören, grundsätzlich einen anderen molekularen Aufbau auf, da sie – bis auf mögliche Verunreinigungen in geringer Menge – kein Magnesium oder Aluminium enthalten. Die Summe an MgO und $Al_2O_3$ im Silikat ist im Gegenstand zu den Smectiten in jedem Fall weniger als 15 Gew.-%, normalerweise jedoch unter 5% und bevorzugt unter 2%. Die in der vorliegenden Erfindung verwendeten Alkalisilikate bzw. die entsprechenden freien Kieselsäuren lassen sich der Gruppe der Phyllosilikate zurechnen. Ihre wasserfreie Zusammensetzung läßt sich mit der angegebenen Formel erklärungsweise beschreiben. Die Alkalimetallionen können ganz oder teilweise gegen Protonen ausgetauscht werden, so daß Me in diesem Fall für Protonen oder verschiedene Alkalimetalle stehen kann. Dementsprechend umfaßt der Begriff Alkalisilikate in allen Fällen auch die entsprechenden freien Kieselsäuren. Es ist bevorzugt, daß Me Natrium ist. Das Ionen-austauschvermögen der in der Erfindung verwendeten kristallinen Alkalisilikate beträgt 130–400 mmol $Me^+$/100 g wasserfreies Silikat. Die Silikate haben im Röntgenbeugungsdiagramm einen oder mehrere Reflexe im Bereich der d-Werte von 3,0 bis 4,0 × $18^{-8}$ cm, die nicht Quarz, Tridymit und Cristobalit zugeordnet werden können.

Für die Erfindung können sowohl natürliche als auch synthetische kristalline Alkalisilikate eingesetzt werden, wie zum Beispiel der natürlich vorkommende Magadiit, $Na_2Si_{14}O_{29}$ × 11 $H_2O$ = und der Kenyait, $Na_2Si_{22}O_{45}$ × 10 $H_2O$ /H. P. Eugster, Science, 157, 1177–1180 (1967) sowie synthetische Produkte der Zusammensetzung $Na_2Si_8O_{17}$, $K_2Si_8O_{17}$ und $Na_2Si_{14}O_{29}$ (R. K. Iler, J. Colloid Sci., 29, 648–657 (1964); DE-PS-2 742 912; G. Lagaly, K. Beneke und A. Weiss, Am. Mineral., 60, 642–649 (1975). Die Korngröße der erfindungsgemäß zu verwendenden Silikate beträgt vorzugsweise 0,1 bis 50 µm.

Die Synthese der schichtförmigen Alkalisilikate, insbesondere der Natrium- und der Kaliumsalze, erfolgt üblicherweise aus Kieselgel, Kieselsol oder gefällter Kieselsäure unter Zusatz von Alkalihydroxid unter hydrothermalen Bedingungen. Gelegentlich wird auch anstelle einer Alkalihydroxidlösung eine entsprechende Carbonatlösung verwendet. Die Menge an Alkali richtet sich dabei nach dem gewünschten Produkt.

Besonders bevorzugt im Rahmen der vorliegenden Anmeldung sind jedoch solche kristallinen Alkalischichtsilikate, deren Herstellung in der deutschen Patentanmeldung P 3 400 132.8 beschrieben ist. Bei diesem Verfahren wird ein in Wasser gelöstes oder ein amorphes Alkalisilikat mit einem molaren Verhältnis $M_2O/SiO_2$ von 0,24 bis 2,0, wobei M für ein Alkalimetall steht, mit so viel einer sauren Verbindung versetzt, daß ein molares Verhältnis $M_2O$ (nicht neutralisiert) /$SiO_2$ von 0,05 bis 0,239 erreicht wird, gegebenenfalls wird durch Verdünnen ein molares Verhältnis $SiO_2/H_2O$ von 1 : 5 bis 1 : 100 eingestellt und die Reaktionsmischung wird so lange bei einer Reaktionstemperatur von 70 bis 250 °C gehalten, bis das Alkalischichtsilikat auskristallisiert ist. Vorzugsweise steht M für Natrium und Kalium.

Eine bevorzugte, sehr reaktive Ausgangsverbindung ist Natronwasserglas mit einem $SiO_2$-Gehalt von ca. 22 bis 37% und einem $Na_2O$-Gehalt von 5 bis 18% sowie einem $Al_2O_3$-Gehalt von unter 0,5%. Besonders bevorzugt ist ein Natronwasserglas mit 22–30 Gew.% $SiO_2$ und 5–9 Gew.-% $Na_2O$. Aber auch amorphe Alkalisilikate, insbesondere feste Natrium- und Kaliumsilikate, die auch wasserfrei sein können, die jedoch in Wasser zumindest bei der Reaktionstemperatur löslich sind, können verwendet werden.

Die zugesetzte saure Verbindung kann ein Säureanhydrid oder ein saures Salz wie Natriumhydrogensulfat sein. Bevorzugt werden jedoch freie organische oder anorganische Säuren. Besonders bevorzugt werden anorganische Säuren, wie Phosphorsäure oder Schwefelsäure. Die Menge an zuzugebender saurer Verbindung richtet sich nach dem Ausgangssilikat und dem gewünschten Endprodukt.

Fast immer weist das gebildete Endprodukt ein geringeres $M_2O/SiO_2$-Verhältnis auf als das Reaktionsgemisch, aus dem es sich bildet. In den Endprodukten liegt das Atomverhältnis Alkalimetall/Silicium etwa zwischen 1 : 4 und 1 : 11. Der pH-Wert der Produktmischung nach Zugabe der sauren Verbindung liegt im allgemeinen über 9. Vorzugsweise wird ein pH-Wert zwischen 10 und 12 eingestellt. Durch den Zusatz der sauren Verbindung wird das Reaktionssystem abgepuffert.

Nach diesem Verfahren lassen sich reine Produkte oder Gemische kristalliner Alkalischichtsilikate erhalten. Die erhaltenen Alkalischichtsilikate zeigen Ionenaustauschvermögen. Ihre Röntgenbeugungsdiagramme sind ähnlich denen bekannter Alkalischichtsilikate.

Diese Alkalischichtsilikate lassen sich in die entsprechende freie Säure überführen, indem man sie mit einer Mineralsäure, beispielsweise Salzsäure oder Schwefelsäure behandelt, wobei für einen vollständigen Ionenaustausch der pH-Wert unterhalb 3 liegen sollte.

Neben den Alkalimetallionen können zusätzlich auch andere Metallionen bei der Synthese der Alkalischichtsilikate anwesend sein, beispielsweise Germanium, Aluminium, Indium, Arsen und Antimon sowie die Nichtmetalle Bor und Phosphor. Sofern die Menge dieser Bestandteile, bezogen auf den Alkaligehalt, kleiner als 10% ist, wird die Synthese nur unwesentlich beeinflußt. Zur Herstellung eines reinen Alkalischichtsilikates, bzw. der freien Säure, ist es vorteilhaft, auf die Zugabe von Fremdmetallen bei der Synthese zu verzichten. Reine Schichtsilikate mit einem anderen Kation als Alkali lassen sich leicht in einem weiteren Schritt aus dem Alkalisalz durch Ionenaustausch bzw. aus der entsprechenden freien Säure durch Neutralisation gewinnen. Das beschriebene Verfahren kann auch in Gegenwart geringer Mengen an organischen Verbindungen durchgeführt werden; vorzugsweise wird jedoch ohne jegliche organische Verbindungen gearbeitet.

Für das beschriebene Verfahren wird ein Molverhältnis der Einsatzprodukte von $H_2O/SiO_2$ von 8 : 1 bis 40 : 1 bevorzugt. Für die Herstellung alkaliarmer Schichtsilikate (Atomverhältnis Me/Si von 1 : 7 bis 1 : 11) ist dabei häufig eine größere Verdünnung mit Wasser vorteilhaft als für die Herstellung der alkalireicheren Schichtsilikate (Atomverhältnis Me/Si etwa 1 : 4 bis 1 : 7). Die Reaktionstemperatur beträgt vorzugsweise 130–230 °C, insbesondere 160–210 °C. Längere Reaktionszeiten, hohe Reaktionstemperaturen und niedrige Verhältnisse von Alkali (nicht neutralisiert)/$SiO_2$ begünstigen die Bildung alkaliarmer Schichtsilikate. Kurze Reaktionszeiten, niedrige Reaktionstemperaturen und hohe Alkali/Si-Verhältnisse begünstigen die Bildung alkalireicher Schichtsilikate.

Die Reaktionsdauer hängt stark von der Reaktionstemperatur ab. Sie kann weniger als 1 Stunde, aber auch mehrere Monate betragen. Die optimale Reaktionsdauer kann für die gewählte Reaktionstemperatur ermittelt werden, indem während der Umsetzung zu verschiedenen Zeitpunkten

Proben entnommen werden, die röntgenographisch untersucht werden.

Die Umsetzung wird vorzugsweise in einem Druckgefäß unter gutem Rühren durchgeführt. Die Zugabe von Impfkristallen ist sehr vorteilhaft, da die Reinheit des Produktes verbessert und die Reaktionszeit verkürzt wird. Jedoch kann auch ohne Impfkristalle gearbeitet werden. Etwaige Beimengungen von amorphen Silikaten oder bei dieser Art der Herstellung mit anfallende amorphe Silikate stören nicht, da sie in dem Waschmittel die Funktion von Buildern übernehmen können. Auch die beschriebenen Phyllosilikate selbst können als Builder wirken.

Die Menge an Impfkristallen kann bei diskontinuierlicher Reaktionsführung bis zu 30 Gew.-%, bezogen auf den $SiO_2$-Anteil des zugesetzten, in Wasser gelösten oder amorphen Alkalisilikats betragen. Impfkristallzusätze unter 0,01 Gew.-% haben keinen erkennbaren Effekt mehr. Anstatt Impfkristalle zuzusetzen, kann es auch ausreichend sein, wenn geringe Reste von einem früheren Ansatz im Reaktionsgefäß verbleiben. Bei kontinuierlicher Reaktionsführung haben sich auch wesentlich höhere Konzentrationen an Kristallkeimen (im stationären Gleichgewicht) als vorteilhaft erwiesen.

Das Verfahren kann diskontinuierlich, halbkontinuierlich und kontinuierlich in Apparaten mit Strömungsrohr-, Rührkessel- oder Kaskadencharakteristik durchgeführt werden.

Nach diesem Verfahren lassen sich verschiedene Alkalischichtsilikate herstellen, u. a. auch das Silikat Na-SKS-1, und Na-SKS-2 das in den Beispielen benutzt wird und das ein Ionenaustauschvermögen von etwa 140 bis 157 mmol bzw. etwa 215 mmol $Na^+$/100 g trockenes Produkt aufweist (rechnerisch bezogen auf geglühtes Produkt). Die Verwendung dieser Produkte ist besonders vorteilhaft, weil sie keine Schwermetallionen enthalten, die das Perborat zersetzen.

Durch den strukturellen Aufbau dieser Schichtkieselsäuren bedingt, tragen die einzelnen Schichten negative Überschußladungen, welche durch Wasserstoff- oder Metallionen kompensiert werden. Diese Kationen sind in Abhängigkeit von den Reaktionsbedingungen zumindest teilweise austauschbar. Detaillierte Beschreibungen für diese Reaktion findet man in der Literatur (Lagaly et al., Organic Complexes of Synthetic magadiite; Proc. Int. Clay Conf., Madrid 1972, p. 663–673, Madrid 1973).

Die organophile Modifizierung der beschriebenen Schichtkieselsäuren erfolgt durch Kationenaustausch, wobei die Wasserstoff- oder Metallionen durch die organischen Kationen der quartären Ammoniumverbindungen der angegebenen Formeln ersetzt werden. Einen schnellen und quantitativen Kationenaustausch zur Organo-SKS erzielt man bei Verwendung von quartären Ammoniumverbindungen mit mindestens einem Alkylrest mit einer Kettenlänge von $C_6$. Je größe die Kettenlänge und die Anzahl der C-Ketten desto steiler ist die Charakteristik der Austauschisotherme. Die Umsetzung erfolgt bei Temperaturen von 20 bis 120 °C, vorzugsweise bei 40 bis 100 °C. Im allgemeinen geht man von den Schichtkieselsäuren in Form ihrer Alkalisalze aus und setzt diese mit den quartären Ammoniumverbindungen der Formeln I–IV um. Man kann aber auch unter sonst gleichen Bedingungen die freie Schichtkieselsäure verwenden und setzt diese mit den Aminen um, die den quartären Ammoniumverbindungen der Formeln I–IV zugrunde liegen und sich von diesen nur durch das Fehlen der Gruppen $R^1$ und X unterscheiden.

Die organischen Kationen sind an sich bekannte Verbindungen. Die Herstellung erfolgt üblicherweise durch Umsetzung eines primären, sekundären, tertiären Amins mit einer anorganischen bzw. organischen Säure oder durch Umsetzung der Amine mit bekannten Alkylierungsmitteln wie z. B. Alkylhalogeniden, Schwefelsäureestern, Alkylenoxiden, Olefinen u.v.m. Als Amine für die Herstellung der Kationen kommen eine Vielzahl von Verbindungen in Frage. Beispielhaft, ohne den Umfang der Erfindung einzuschränken seien genannt: Mono-, Di und Trialkyl- und -alkenylamine, Fettsäurederivate von Diethanolamin, Polyalkylenpoliaminen («Aminester», «Amidamine», Imidazoline).

Die Geschwindigkeit und Vollständigkeit des Kationenaustausches hängen in erster Linie ab von der Temperatur, der Löslichkeit der quartären Ammoniumverbindungen (QAV) und damit von der Anzahl und Länge der Alkylketten. In der Regel begünstigen höhere Temperaturen den Austausch. Bei einer Temperatur von 60 °C stellt sich bereits nach kurzer Zeit, teilweise nach Minuten das Gleichgewicht ein. Je länger die Alkylketten, desto quantitativer verläuft der Kationenaustausch.

Bedingt durch den höheren Raumbedarf der organischen Kationen ist der Einbau mit einer Aufweitung des Schichtabstandes verbunden. Dieser Effekt kann im Röntgenbeugungsdiagramm nachgewiesen werden. Gleichzeitig verliert die SKS mit dem Einbau der QAV den hydrophilen, wasserquellbaren Charakter. Die Zwischenräume der einzelnen Schichten werden organophil, d. h. durch van der Waalsche- und Dipol-Wechselwirkung können in die verbleibenden Hohlräume organische Verbindungen adsorbiert werden. Dieser Vorgang ist in manchen Fällen mit einer zusätzlichen Schichtaufweitung verbunden. Entscheidend für ein optimales Adsorptionsergebnis ist der Belegungsgrad der SKS mit QAV.

Ohne Einfluß bezüglich der Adsorption von organischen Verbindungen bleibt die Vorgeschichte der Organo-SKS. Sie können unmittelbar vor der Anwendung als wäßrige Dispersion auch in größerer Verdünnung aus SKS und QAV hergestellt und als Adsorbens verwendet werden. Alternativ kann die Organo-SKS auch in Substanz isoliert, getrocknet oder mit anderen Komponenten gemischt werden, wenn dies anwendungstechnische Vorteile verspricht.

Die beschriebenen Adsorbentien werden beim Waschvorgang Verwendung finden, wo durch Tenside beachtliche Mengen an organischen Verunreinigungen, z. B. Hautfett, von der Wäsche entfernt und in der Waschflotte solubilisiert werden müssen. Diese Solubilisierung oder Emulgierung der Fette wird bei den heute üblichen Waschmitteln überwiegend durch die nichtionischen Tenside erreicht. Diese Aufgabe können die beschriebenen Organo-SKS übernehmen, sodaß diese gegebenenfalls einen Teil oder die gesamte Menge der nichtionischen Tenside in der Waschmittelformulierung ersetzen können.

Neben den nichtionischen Tensiden können die Feinwasch-, Pflegeleicht- oder Grobwaschmittel eine Reihe von anderen, bekannten Komponenten enthalten, wie z. B. anionische und zwitterionische Tenside, Gerüstsubstanzen, Komplexbildner, Bleichkomponenten, Perborataktivatoren, Schaumstabilisatoren, Schauminhibitoren, Schmutzträger, Enzyme, weichmachende Amine, quartäre Ammoniumverbindungen, Parfümöle, optische Aufheller, Füllstoffe u.v.m. Die Formulierungen sind in der Literatur ausführlich beschrieben (vgl. z. B. Schwartz, Perry, Berch, «Surfache Active Agents and Detergents» Vol. 11 (1958) Seiten 25–93, 120–130 und 238–317); Lindner; «Tenside, Textilhilfsmittel, Waschrohstoffe» Bd. I, (1964), Seiten 561–921 und 1035–1041. P. Bert, «Chemie und Technologie moderner Waschmittel», Chemikerzeitung 94, 1970, Nr. 23/24, S. 974 ff.). Weiterhin zeigen die Versuche, daß neben Triglyceriden auch tertiäre Amine, die als weichmachende Verbindung in Waschmitteln eingesetzt werden, gebunden werden.

BEISPIELE

In den nachfolgenden Beispielen wurde ein Triglycerid (Sonnenblumenöl) stellvertretend für die zahlreichen organischen Verbindungen ausgewählt, welche an den beschriebenen Systemen QAV/SKS adsorbiert werden können. Das eingesetzte Sonnenblumenöl beinhaltet polare Estergruppen und mehrere ungesättigte, schwachpolare Bindungen im Alkylrest der Fettsäuren.

Nach Römpps Chemie Lexikon enthalten 100 g Sonnenblumenöl 99,9 g Fette auf Basis von 5,6% Palmitin-, 2,2% Stearin-, 0,9% Arachidin-, 25,1% Olein- und 66,2% Linolsäure. Sonnenblumenöl wurde ausgewählt, da Fette, Fettsäuren und Fettsäureester den Hauptbestandteil der Fettverschmutzung von Wäsche darstellen.

Generell kann jede andere organische Verbindung mit mindestens einer Doppelbindung und einer C-Kettenlänge größer 2, besser größer 6, in der beschriebenen Art adsorbiert werden. Polare Gruppen im Molekül verstärken die Bindung der Substanzen im organophilen Schichtsilikat und bewirken somit eine quantitativere Adsorption.

Die beschriebene Anwendung findet ihre Grenzen bei n-Paraffinen und sterisch sehr anspruchsvollen Verbindungen, die nicht oder nur zu einem geringen Teil in die organophile Schichtkieselsäuren eingebaut werden.

Flüssige, auch hochviskose Kohlenwasserstoffe, z. B. Motorenöle oder Schmierfette werden durch die oleophilen Schichtkieselsäuren koaguliert, d. h. aus der wäßrigen Dispersion ausgeflockt.

Die im Text verwendeten Abkürzungen haben folgende Bedeutung:

QAV quartäre Ammoniumverbindung

QAV/SKS Schichtsilikat der beschriebenen Art, wobei die negativen Schichtladungen durch QAV teilweise oder vollständig kompensiert sind durch das organische Ammonium-Ion. Dieser Typ ist organo- bzw. oleophil, d. h. in der Lage, organische Verbindungen zu adsorbieren.

Na-SKS-1 Natriumsalz der Schichtkieselsäuren SKS-1

Na-SKS-2 Natriumsalz der Schichtkieselsäuren SKS-2

Für die Adsorptionsversuche wurden die Natriumsalze von zwei verschiedenen Schichtkieselsäuren eingesetzt, die im folgenden mit Na-SKS-1 (kenyaitartig) und Na-SKS-1 (magadiitartig) bezeichnet werden.

Das Natriumsilikat Na-SKS-1 wurde auf folgendem Weg hergestellt:

Man stellte zunächst eine Reaktionsmischung der molaren Zusammensetzung

$$0{,}303\ Na_2O : 0{,}0052\ Al_2O_3 : SiO_2 : 30\ H_2O$$

dadurch her, daß man 83,5 Gewichtsteile Natronwasserglas (27% $SiO_2$, 8,43% $Na_2O$, 0,24% $Al_2O_3$) zu 149 Teilen Wasser gibt. Danach wird ein Teil eines filterfeuchten kristallinen Natriumsilikates aus einem früheren Versuch (71% Gewichtsverlust durch Erhitzen auf 1200 °C; für die Berechnung der molaren Zusammensetzung wurde nur der Wasseranteil berücksichtigt) zugegeben. Man setzt anschließend langsam unter Rühren 4,93 Teile 96%ige Schwefelsäure zu. Danach hat die Reaktionsmischung folgende molare Zusammensetzung:

$$0{,}174\ Na_2O : 0{,}0052\ Al_2O_3 : SiO_2 : 0{,}129\ Na_2SO_4 : 30\ H_2O.$$

Die Reaktionsmischung wird in einem Edelstahl-Autoklaven innerhalb von 1,5 Stunden auf 205 °C erhitzt, 2,5 Stunden bei dieser Temperatur gehalten und anschließend langsam abgekühlt. Nach dem Abkühlen wird die Reaktionsmischung filtriert, mit Wasser gewaschen und auf einer Nutsche trocken gesaugt. Das filterfeuchte Produkt weist einen Glühverlust von 55% auf. Das an der Luft kurzzeitig getrocknete Produkt wird thermogravimetrisch untersucht. Bis zu einer Temperatur von etwa 140 °C ist ein Gewichtsverlust von 43% eingetragen. Bis ca. 1000 °C wird keine weitere wesentliche Gewichtsabnahme beobachtet. Das bei 120 °C bis zur Gewichtskonstanz getrocknete Produkt, Na-SKS-1, zeigt folgende elementaranalytische Zusammensetzung: 3,8% Na, 0,24% Al, 41,5% Si und 0,003% Fe. Es läßt sich daraus ein molares $SiO_2/Na_2O$-Verhältnis von 17,9 errechnen. Das Röntgenbeugungsdiagramm des an der Luft getrockneten Natriumsilikats (Na-SKS-1) ist in der folgenden Tabelle aufgeführt.

| d ($10^{-8}$ cm) | I/Io |
|---|---|
| 20,5 | 56 |
| 10,0 | 11 |
| 7,31 | 4 |
| 4,99 | 13 |
| 3,64 | 22 |
| 3,52 | 31 |
| 3,44 | 100 |
| 3,34 | 46 |
| 3,21 | 53 |
| 2,94 | 16 |

Die Kationenaustauschkapazität von Na-SKS-1 beträgt ca. 150 mmol $Na^{\oplus}$/100 g bezogen auf geglühtes Material.

Die Herstellung von Natriumsilikat SKS-2 erfolgte auf folgendem Weg: Das Produkt wird aus den gleichen Ausgangsmaterialien hergestellt wie das oben beschriebene Natriumsilikat SKS-1. Der Reaktionsmischung werden Impfkristalle eines magadiitartigen Silikats aus einem früheren Versuch zugesetzt. Die Reaktionsmischung wird 19 Stunden bei 165 °C gerührt, nach dem Erkalten filtriert, mit Wasser gewaschen und auf einer Nutsche trockengesaugt. 10 g der Mutterlauge der Reaktionsmischung, mit 250 ml Wasser verdünnt, haben einen pH-Wert von 10,4. Das Röntgenbeugungsdiagramm des an der Luft kurzzeitig getrockneten Produktes (Na-SKS-2) zeigt die unten angegebene Tabelle. Das filterfeuchte Produkt, welches beim Glühen (> 1000 °C) 61,3% seines Gewichtes verliert, wird mit Schwefelsäure analog Beispiel 4 titriert. Eine weitere Tabelle zeigt die Titrationswerte. Bei der graphischen Darstellung wird aus dem Wendepunkt der Kurve bei pH 5,0 ein Äquivalenzwert von 215 meq/100 g geglühtes Produkt ermittelt. Für ein Produkt der Zusammensetzung $Na_2O \cdot y\, SiO_2$ wird hieraus ein Ionenaustauschvermögen von 138 mmol $Na^+$/mol $SiO_2$, entsprechend einem $SiO_2 : Na_2O$-Verhältnis von 14,5 : 1 ermittelt. Arbeitet man ohne Impfkristalle, so werden deutlich längere Reaktionszeiten erforderlich.

Röntgenbeugungsdiagramm

| d ($10^{-8}$ cm) | I/Io |
|---|---|
| 15,5 | 100 |
| 7,76 | 13 |
| 5,15 | 20 |
| 4,69 | 8 |
| 4,44 | 10 |
| 4,23 | 7 |
| 3,63 | 18 |
| 3,54 | 24 |
| 3,44 | 79 |
| 3,30 | 49 |
| 3,14 | 65 |
| 2,81 | 11 |
| 2,58 | 8 |
| 2,34 | 6 |

Titrationswerte

| ml 0,5 m $H_2SO_4$ | pH | mmol (ausgetauschte) $Na^{\oplus}$-Ionen/ 100 g geglühtes Produkt |
|---|---|---|
| 0,00 | 10,59 | 0,0 |
| 1,00 | 9,81 | 25,8 |
| 2,00 | 9,13 | 51,7 |
| 3,00 | 7,28 | 77,5 |
| 4,45 | 6,73 | 115,0 |
| 5,00 | 6,61 | 129,2 |
| 6,00 | 6,54 | 155,0 |
| 7,00 | 6,40 | 180,8 |
| 8,00 | 6,01 | 206,7 |
| 8,50 | 3,97 | 219,6 |
| 9,00 | 2,95 | 232,5 |
| 9,25 | 2,76 | 239,0 |
| 9,50 | 2,65 | 245,4 |
| 9,75 | 2,55 | 251,9 |
| 10,00 | 2,48 | 258,2 |
| 10,50 | 2,34 | 217,7 |
| 11,00 | 2,16 | 297,1 |
| 12,00 | 2,09 | 310,0 |
| 12,50 | 2,03 | 322,9 |
| 13,00 | 1,98 | 355,8 |

Die Austauschkapazität von Na-SKS-2 liegt bei ca. 215 mmol $Na^{\oplus}$/100 g, bezogen auf geglühtes Material.

Für die Versuche wurden jeweils die filterfeuchten Natriumsilikate Na-SKS-1 und Na-SKS-2 eingesetzt.

Die verwendeten quartären Ammoniumverbindungen, abgekürzt QAV genannt, sind an sich bekannte Produkte. Die Mengenangaben in den verschiedenen Beispielen beziehen sich immer auf QAV 100%. Bei Einsatz der marktüblichen Formulierungen muß der jeweilige Wirkstoffgehalt berücksichtigt werden.

QAV-1 Dioctyldimethylammoniumchlorid
$(n\text{-}C_8H_{12})_2\,\overset{\oplus}{N}\,(CH_3)_2\,Cl^{\ominus}$

QAV-2 Ditalgalkyldimethylammoniumchlorid
$R_2\overset{\oplus}{N}(CH_3)_2\,Cl^{\ominus}$ R = hydriertes Talgalkyl

QAV-3 Cocosalkyltrimethylammoniumchlorid
$R\text{–}\overset{\oplus}{N}(CH_3)_3\,Cl^{\ominus}$ R = Cocosalkyl

QAV-4 Stearyltrimethylammoniumchlorid
$n\text{-}C_{12}H_{37}\text{–}\overset{\oplus}{N}(CH_3)_3\,Cl^{\ominus}$

Diese Verbindungen wurden exemplarisch unter der Vielzahl der bekannten organischen Kationen ausgewählt. Generell lassen sich auch andere QAV für die erfindungsgemäße Anwendung einsetzen.

Als Aminkomponente wurde stellvertretend Methyldistearylamin (MDSA) verwendet um zu zeigen, daß die Anwesenheit dieser als Wäscheweichspülmittel dienenden Verbindung die Adsorptionsfähigkeit der organophil modifizierten Schichtkieselsäure nicht negativ beeinflußt.

Die Versuchsparameter
Temperatur: 60 °C
pH: 10 ± 0,5
Zeitdauer: 30 Minuten
wurden so gewählt, daß sie den Bedingungen beim Waschprozeß entsprechen (60°-Wäsche) und diesen in einem bewußt einfach gehaltenen Modell simulieren. Die große Menge an zugegebenem Fett liegt an der Obergrenze der Fett-Verschmutzung von Wäsche und ermöglicht eine gute Differenzierung bezüglich der Leistungsfähigkeit der verschiedenen Systeme.

Beispiel 1a (allgemeine Vorschrift)
In-situ-Herstellung von organophilen Schichtkieselsäuren (QAV/SKS)

In einem Kolben, versehen mit Rührer, Thermometer und Rückflußkühler werden 1 l Wasser vorgelegt, auf 60 °C erwärmt und bei dieser Temperatur mit 6,5 g Na-SKS-1 bzw. 7,5 g Na-SKS-2 (entsprechend 2,9 g trockenem Na-SKS-1 bzw. Na-SKS-2) versetzt und durch Rühren feinst dispergiert. Der pH-Wert wird durch Zugabe von ca. 2,9 g Soda ($Na_2CO_3 \cdot 10\,H_2O$) auf pH 10 ± 0,5 eingestellt. Anschließend wird die entsprechende Menge an QAV und gegebenenfalls ein tert. Amin zudosiert und 5 Minuten kräftig verrührt. Der Kationenaustausch $Na^+$ gegen QAV verläuft unter diesen Bedingungen sehr rasch bis zur Gleichgewichtseinstellung. Die in-situ hergestellte QAV/SKS besitzt je nach C-Kettenlänge und Menge der ausgetauschten QAV eine differenzierte Adsorptionskapazität und Organophilie.

Beispiel 1b
Herstellung und Isolierung von QAV/SKS

20,0 g Na-SKS-1 bzw. 20,0 g Na-SKS-2 werden in definiertem Mengenverhältnis mit den QAV-1 bis -4 bei 60 °C und pH 10 ± 0,5 in 1 l Wasser umgesetzt (entsprechend der allgemeinen Vorschrift (Beispiel 1a) /Tabelle 1). Nach erfolgtem Kationsaustausch (30 Minuten) wird die QAV/SKS durch Filtration oder Zentrifugieren isoliert und getrocknet (80 °C, 100 Torr). Der Schichtenabstand der QAV/SKS wurde über das Röntgenbeugungsdiagramm ermittelt. Sämtliche QAV/SKS haben eine Schichtenaufweitung durch den Kationenaustausch, d. h. Einbau der QAV erfahren. Die Systeme QAV/SKS liegen demnach in der organophilen Form vor. Das Ausmaß der Aufweitung ist von der Art der QAV abhängig (Tabelle 1).

Tabelle 1
Einsatzmengen an QAV 100% und Schichtabstände der getrockneten QAV/SKS

| | – | QAV-1 | QAV-2 | QAV-3 | QAV-4 |
|---|---|---|---|---|---|
| 20,0 g Na-SKS-1 | – | 4,0 g | 7,6 g | 3,7 g | 4,6 g |
| Schichtabstand d [Å] | 20,5 | 37 | 55 | 35 | 40 |
| 20,0 g Na-SKS-2 | – | 5,0 g | 9,5 g | 4,6 g | 5,3 g |
| Schichtabstand d [Å] | 15,8 | 32 | 52 | 31 | 36 |

Bestimmung der Adsorptionskapazität in wäßriger Dispersion

Beispiel 2a

Zu einer Dispersion, entsprechend Beispiel 1a aus 6,5 g Na-SKS-1 filterfeucht (= 2,9 g Trockensubstanz) und 1,33 g QAV-1 in 1 l Wasser hergestellt, werden bei 60 °C unter Rühren 5,0 ml = 4,60 g Sonnenblumenöl dosiert und 30 Minuten bei dieser Temperatur gerührt. Während dieser Zeitspanne wird das Öl an der QAV/SKS durch Einlagerung zwischen die Silikatschichten und teilweise durch Adsorption an der Oberfläche aus der wäßrigen Emulsion entfernt. Die heiße Dispersion wird nach 30 Minuten zentrifugiert (3000 Upm, 30 Minuten), wobei die mit Öl beladene QAV/SKS unten abgeschieden wird, während das nicht adsorbierte Öl aufrahmt. Die flüssige Phase wird dekantiert und dreimal mit je 100 ml Cyclohexan extrahiert, die vereinigten Extrakte über Magnesiumsulfat getrocknet und nach Filtration eingeengt. Der Rückstand von 0,65 g entspricht dem nicht adsorbierten Öl.

Es wurden demnach 3,95 g Öl entsprechend 86% der ursprünglichen Menge an Sonnenblumenöl gebunden.

Bei den folgenden Beispielen wurde in gleicher Weise verfahren. Die Ergebnisse sind tabellarisch zusammengefaßt (Tabelle 2 und 3).

Tabelle 2
Fettadsorptionsvermögen verschiedener organophiler Schichtkieselsäuren vom Typ SKS-1/QAV

| Beispiel | Einsatzmenge [g] | | | | | | Absorbiertes Sonnenblumenöl | |
|---|---|---|---|---|---|---|---|---|
| | Na-SKS-1 45%ig | QAV-1 | QAV-2 | QAV-3 | QAV-4 | Sonnenblumenöl | g | % |
| 2b | 6,50 | 1,05 | – | – | – | 4,60 | 4,55 | 99 |
| 2c | 6,50 | 0,75 | – | – | – | 4,60 | 4,44 | 96 |

Tabelle 2 (Fortsetzung)
Fettadsorptionsvermögen verschiedener organophiler Schichtkieselsäuren vom Typ SKS-1/QAV

| Beispiel | Einsatzmenge [g] Na-SKS-1 45%ig | QAV-1 | QAV-2 | QAV-3 | QAV-4 | Sonnenblumenöl | Absorbiertes Sonnenblumenöl g | % |
|---|---|---|---|---|---|---|---|---|
| 2d | 6,50 | 0,52 | – | – | – | 4,60 | 4,14 | 90 |
| 3a | 6,50 | – | 2,48 | – | – | 4,60 | 0,85 | 18 |
| 3b | 6,50 | – | 1,98 | – | – | 4,60 | 3,51 | 76 |
| 3c | 6,50 | – | 1,49 | – | – | 4,60 | 4,59 | 100 |
| 3d | 6,50 | – | 0,99 | – | – | 4,60 | 4,57 | 99 |
| 4a | 6,50 | – | – | 1,19 | – | 4,60 | 3,79 | 82 |
| 4b | 6,50 | – | – | 0,95 | – | 4,60 | 4,58 | 100 |
| 4c | 6,50 | – | – | 0,71 | – | 4,60 | 4,52 | 98 |
| 4d | 6,50 | – | – | 0,48 | – | 4,60 | 3,94 | 86 |
| 5a | 6,50 | – | – | – | 1,51 | 4,60 | 1,17 | 25 |
| 5b | 6,50 | – | – | – | 1,21 | 4,60 | 4,57 | 99 |
| 5c | 6,50 | – | – | – | 0,91 | 4,60 | 4,54 | 99 |
| 5d | 6,50 | – | – | – | 0,60 | 4,60 | 4,26 | 93 |

Tabelle 2
Fettadsorptionsvermögen verschiedener organophiler Schichtkieselsäuren vom Typ SKS-2/QAV

| Beispiel | Einsatzmenge [g] Na-SKS-2 39%ig | QAV-1 | QAV-2 | QAV-3 | QAV-4 | Sonnenblumenöl | Absorbiertes Sonnenblumenöl g | % |
|---|---|---|---|---|---|---|---|---|
| 6a | 7,50 | 1,91 | – | – | – | 4,60 | 3,63 | 75 |
| 6b | 7,50 | 1,15 | – | – | – | 4,60 | 4,56 | 99 |
| 6c | 7,50 | 0,76 | – | – | – | 4,60 | 4,49 | 98 |
| 7a | 7,50 | – | 3,56 | – | – | 4,60 | 0,58 | 13 |
| 7b | 7,50 | – | 2,14 | – | – | 4,60 | 4,50 | 98 |
| 7c | 7,50 | – | 1,42 | – | – | 4,60 | 4,54 | 99 |
| 8a | 7,50 | – | – | 1,70 | – | 4,60 | 1,15 | 25 |
| 8b | 7,50 | – | – | 1,02 | – | 4,60 | 4,57 | 99 |
| 8c | 7,50 | – | – | 0,68 | – | 4,60 | 4,56 | 99 |
| 9a | 7,50 | – | – | – | 2,17 | 4,60 | 0,70 | 15 |
| 9b | 7,50 | – | – | – | 1,30 | 4,60 | 4,59 | 100 |
| 9c | 7,50 | – | – | – | 0,87 | 4,60 | 4,55 | 99 |

Beispiel 10

Entsprechend Beispiel 2a werden 6,5 g Na-SKS-1 mit 1,33 g QAV-1 umgesetzt, aber abweichend von Beispiel 2a mit 5,0 ml = 4,60 g Sonnenblumenöl und 2,0 g Methyldistearylamin (MDSA) versetzt und nach 30 Minuten Rühren bei 60 °C wie beschrieben aufgearbeitet.

Der Rückstand betrug: 2,38 g

Durch Titration des Rückstandes mit 0,1 n $HClO_4$ wurde der Gehalt an MDSA bestimmt.

| | |
|---|---|
| Sonnenblumenöl im Rückstand | 1,71 g |
| MDSA im Rückstand | 0,67 g |
| Adsorbierte Ölmenge | 2,89 g = 63% |
| Adsorbiertes MDSA | 1,33 g = 67% |

Beispiel 11

6,5 g NA-SKS-1 und 0,71 g QAV-3 werden analog Beispiel 2a umgesetzt. Anschließend werden 5,0 ml = 4,60 g Sonnenblumenöl und 2,00 g MDSA bei 60 °C zudosiert und 30 Minuten bei dieser Temperatur gerührt. Die Aufarbeitung erfolgt gemäß Beispiel 2a. Als Rückstand erhielten wir 0,08 g bestehend aus 0,02 g MDSA und 0,06 g Sonnenblumenöl.

| | |
|---|---|
| Adsorbierte Ölmenge | 4,56 g = 99% |
| Adsorbiertes MDSA | 1,98 g = 99% |

Beispiel 12

Wie im Beispiel 2a beschrieben, werden 7,5 g Na-SKS-2 mit 1,91 g QAV-1 zum organophilen Schichtsilikat umgesetzt. Anschließend werden bei 60 °C 5,0 ml = 4,60 g Sonnenblumenöl und 2,0 g MDSA zudosiert, 30 Minuten gerührt und wie üblich aufgearbeitet.

Der Rückstand betrug 3,46 g, bestehend aus 2,42 g Sonnenblumenöl und 1,04 g MDSA.

| | |
|---|---|
| Adsorbierte Ölmenge | 2,18 g = 47% |
| Adsorbiertes MDSS | 0,96 g = 48% |

Blindversuche mit Na-SKS-1 und Na-SKS-2

In 1 l Wasser von 60 °C werden unter Rühren 6,5 g Na-SKS-1 bzw. 7,5 g Na-SKS-2 dispergiert, der pH-Wert durch Zugabe von 2,9 g Soda auf pH 10 ± 0,5 gestellt und anschließend 5,0 ml = 4,60 g Sonnenblumenöl zudosiert. Nach 30 Minuten wird wie in Beispiel 2a aufgearbeitet.

Bei Einsatz von Na-SKS-1 betrug der Rückstand 3,65 g Öl (= 79%)
und bei Na-SKS-2 3,77 g Öl (= 82%)

In der Differenz zu 100% manifestieren sich die verfahrensbedingten Verluste an Sonnenblumenöl durch Adsorption an den Wandungen der Gefäße und die Eigenadsorption der Schichtkieselsäuren.

Im extrahierten Sonnenblumenöl (= Rückstand) wurde durch Titration der Gehalt an hydrolisiertem Öl bestimmt. Weniger als 5%, in der Regel weniger als 1% des Sonnenblumenöls werden während der angewandten Prozedur hydrolisiert.

Ergebnis:

Erfindungsgemäß sind organophile Schichtkieselsäuren in der Lage, organische Verbindungen – speziell Triglyceride schnell und quantitativ aus wäßriger Flotte zu adsorbieren. Diese Eigenschaft bleibt auch in Gegenwart eines Weichmacheramins wie MDSA zum größten Teil erhalten. Die besagten Schichtkieselsäuren sind daher als waschverstärkende Additive in Waschmitteln hervorragend geeignet.

## Patentansprüche

1. Verwendung von organophil modifizierten Schichtkieselsäuren als waschverstärkende Additive in Waschmitteln, dadurch gekennzeichnet, daß die organophilen Schichtkieselsäuren aus folgenden Komponenten hergestellt werden:

a) 5–80%, vorzugsweise 10–50% einer quartären Ammoniumverbindung der Formeln I–IV

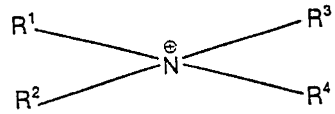

$X^{\ominus}$ (I)

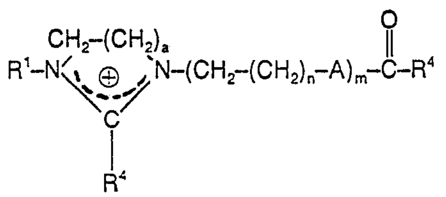

$X^{\ominus}$ (II)

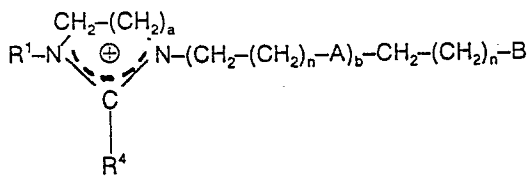

$X^{\ominus}$ (III)

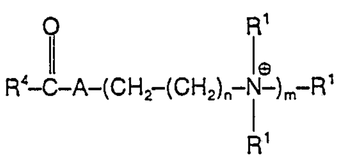

$X^{\ominus}$ (IV)

wobei $R^1$ und $R^2$ gleich oder verschieden sein können und Waserstoff, $C_1$–$C_4$-Alkyl, $C_2$–$C_4$-Hydroxyalkyl oder Benzyl, $R^3$ Wasserstoff, $C_1$–$C_{22}$-, vorzugsweise $C_6$–$C_{22}$-Alkyl bzw. -Alkenyl, $C_2$–$C_4$-Hydroxyalkyl oder Benzyl, $R^4$ $C_1$–$C_{22}$-, vorzugsweise $C_6$–$C_{22}$-Alkyl, $C_6$–$C_{22}$-Alkenyl, $C_4$–$C_{22}$-Akoxyalkyl, $C_4$–$C_{22}$-Alkylphenoxyethyl, a 1 oder 2, b eine Zahl von 0 bis 3, n bzw. m eine Zahl von 1–4, A NH oder O, B, $NH_2$, $N(R^1)_2$, $\overset{\oplus}{N}(R^1)_3$ $X^{\ominus}$ oder OH und $X^{\ominus}$ ein Anion bedeuten, sowie

b) 95%, vorzugsweise 50–90% eines kristallinen Schichtsilikats aus der Gruppe der Phyllosilikate der Formel

$$Me_2Si_xO_{2x+1} \cdot yH_2O$$

wobei Me ein Alkalimetallion oder ein Proton, x eine Zahl größer 7, insbesondere von 7,5 bis 23 und y eine Zahl kleiner 7 x bedeutet.

2. Verwendung der in Anspruch 1 beschriebenen Schichtkieselsäuren in Waschmitteln als waschverstärkendes Additiv in Gegenwart von weichmachenden Substanzen.

## Claims

1. The use of an organophilici-modified phyllosilicic acid as an additive for enhancing the washing action in detergents, wherein the organophilic phyllosilicic acid is prepared from the following components:

a) 5–80%, preferably 10–50%, of a quaternary ammonium compound of the formulae I–IV

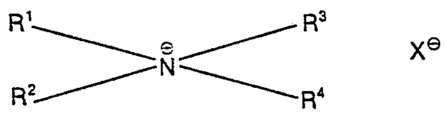
(I)

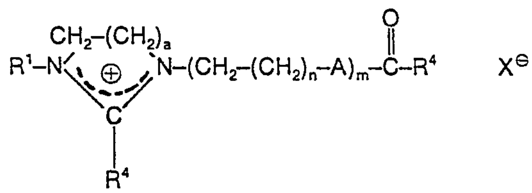
(II)

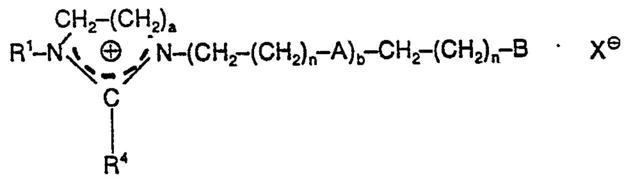
(III)

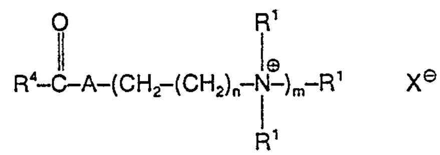
(IV)

in which $R^1$ and $R^2$ can be identical or different and denote hydrogen, $C_1$–$C_4$-alkyl, $C_2$–$C_4$-hydroxyalkly or benzyl, $R^3$ denotes hydrogen, $C_1$–$C_{22}$-alkyl or $C_2$–$C_{22}$-alkenyl, preferably $C_6$–$C_{22}$-alkyl or $C_6$–$C_{22}$-alkenyl, $C_2$–$C_4$-hydroxyalkyl or benzyl, $R^4$ denotes $C_1$–$C_{22}$-alkyl, preferably $C_6$–$C_{22}$-alkyl, $C_6$–$C_{22}$-alkenyl, $C_4$–$C_{22}$-alkoxyalkyl or $C_4$–$C_{22}$-alkylphenoxyethyl, a denotes 1 or 2, b denotes a number form 0 to 3, n or m denote a number form 1 to 4, A denotes NH or O, B denotes $NH_2$, $N(R^1)_2$, $\overset{\oplus}{N}(R^1)_3X^{\ominus}$ or OH and $X^{\ominus}$ denotes an anion, and

b) 20–95%, preferably 50–90%, of a crystalline phyllosilicate belonging to the gorup comprising the phyllosilicates of the formula

$$Me_2Si_xO_{2x-1} \cdot yH_2O$$

in which Me denotes an alkali metal ion or a proton, x denotes a number greater than 7, in particular from 7.5 to 23, and y denotes a number smaller than 7 x.

2. The use of the phyllosilicic acid described in claim 1 as an additive for enhancing the washing action in detergents, in the presence of softening substances.

**Revendications**

1. Utilisation de phyllosilicates à modification organophile en tant qu'additifs renforçateurs de lavage dans les détergents, caractérisée en ce qu'on prépare les phyllosilicates organiques à partir des composants suivants:

a) 5–80%, de préférence 10–50% d'un composé de l'ammonium quaternaire de formules I–IV

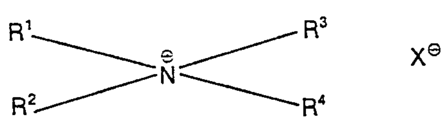
(I)

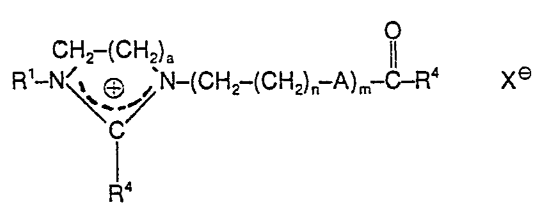
(II)

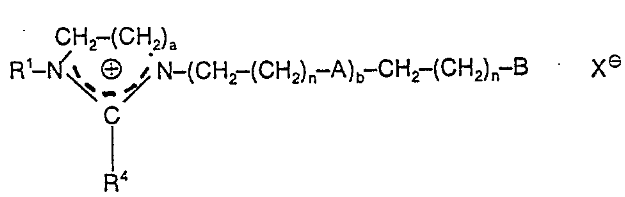
(III)

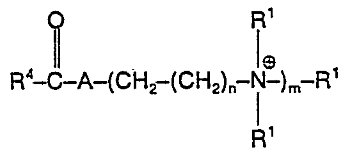 $X^{\ominus}$ (IV)

dans lesquelles $R^1$ et $R^2$ peuvent être identiques ou différents et représentent chacun un hydrogène, un radical alkyle en $C_1$–$C_4$, hydroxyalkyle en $C_2$–$C_4$ ou benzyle, $R^3$ est un hydrogène ou un radical alkyle en $C_2$–$C_{22}$ ou alcényle en $C_2$–$C_{22}$, de préférence en $C_6$–$C_{22}$, hydroxyalkyle en $C_2$–$C_4$ ou benzyle, $R^4$ est un radical alkyle en $C_1$–$C_{22}$, de préférence en $C_6$–$C_{22}$, alcényle en $C_6$–$C_{22}$, alcoxyalkyle en $C_4$–$C_{22}$, (alkyle en $C_4$–$C_{22}$)phénoxyéthyle, a vaut 1 ou 2, b est un nombre de 0 à 3, n et m sont chacun nombre de 1–4, A est NH ou O, B est $NH_2$, $N(R^1)_2$, $\overset{\oplus}{N}(R^1)_3X^{\ominus}$ ou OH, et $X^{\ominus}$ est un anion, et

b) 20–95%, de préférence 50–90% d'un phyllosilicate cristallin appartenant au groupe des phyllosilicates de formule

$$Me_2Si_xO_{2x+1} \cdot yH_2O$$

où Me est un ion de métal alcalin ou un proton, x est un nombre supérieur à 7, en particulier de 7,5 à 23, et y est un nombre inférieur à 7 x.

2. Utilisation des phyllosilicates décrits dans la revendication 1 dans des détergents, en tant qu'additifs renforçateurs de lavage, en présence de substances assouplissantes.